## Europäisches Patentamt

## European Patent Office

## Office européen des brevets

(19)

(11) Publication number: **0 089 934**
**B1**

(12)

# EUROPEAN PATENT SPECIFICATION

(45) Date of publication of the patent specification:
15.01.86

(21) Application number: 83850045.2

(22) Date of filling: 25.02.83

(51) Int. Cl.⁴: **A 47 B 57/48,** F 16 B 12/16, F 16 B 25/00

(54) A combination of a shelving structure and fasteners, the shelving structure being made of wood or the like.

(30) Priority: 19.03.82 SE 8201759

(43) Date of publication of application:
28.09.83 Bulletin 83/39

(45) Publication of the grant of the patent:
15.01.86 Bulletin 86/3

(84) Designated Contracting States:
AT BE CH DE FR GB IT LI NL

(56) References cited:
EP-A-0 063 396
DE-A-2 546 750
FR-A-2 307 162
FR-A-2 370 452
GB-A-171 334
SE-A-394 793
US-A-1 769 096
US-A-4 146 140

(73) Proprietor: Lundqvist, Harald, 21, Chemin des Cuarroz, CH- 1807 Blonay (CH)

(72) Inventor: Lundqvist, Harald, 21, Chemin des Cuarroz, CH- 1807 Blonay (CH)

(74) Representative: Omming, Allan, A. OMMING & CO. AB Sveavägen 28- 30, S-111 34 Stockholm (SE)

LIBER, STOCKHOLM 1986

EP 0 089 934 B1

## Description

The present invention relates to a combination of a shelving structure and fasteners; the shelving structure being made of wood or of sheet-like material having properties like wood, and comprising a side-piece and a shelf, the fasteners being one-piece and hook-like and each comprising an insert peg which is arranged to be inserted into a corresponding insert hole of non-round configuration, formed in said side-piece of said shelving structure, and which has arranged thereon locking means for preventing the withdrawal of said insert peg from said insert hole; a carrier arm having an abutment surface against which the shelf is brought to bear; and an upstanding binding peg which forms an angle with the shelf and which is inserted into a binding hole in the under-surface of said shelf, thus locking the shelf to the side-piece in a horizontal direction.

A fastener for securing the back-piece and shelves of a shelving structure is known from Swedish Patent Specification No 394 793. In this case, however, it is assumed that the insert peg of the hook-like fastener extends through the back-piece and is locked to the back surface thereof. With normal manufacturing tolerances, however, the resultant connection is not sufficiently secure and, furthermore, the solution afforded is not suitable to the problem of securing shelves to respective side-pieces of the shelving structure, since it would require the provision of through-passing holes, which would spoil the aesthetic appearance of the shelving, and also the use of pegs of impracticable length.

Another solution of a similar kind is known from the German Published Patent Application No 25 46 750. In this case, however, each fastener comprises two parts, of which one is intended to be twisted relative to the other, to fasten in a drilled hole. This solution is too expensive and complicated for consideration as a solution to the problem solved by the present invention.

The object of the present invention is to provide a combination of the kind described, which is of particularly simple construction and which forms a shelving structure, a cabinet structure, or like structure in which the shelves can be readily moved.

This object is achieved in accordance with the invention in that the insert peg has a core part which is provided with a plate-like projection, or a plurality of axially spaced plate-like projections, located in a plane, or in respective planes, extending substantially at right angles to said core part on the upper and/or underside thereof, as seen in the direction of the upstanding binding peg; in that the non-round insert hole has a width which is greater than its height and a cross-sectional shape which corresponds to the non-round shape of the core part and the projection or projections together; and in that the core part has a height and a width substantially equal to the height of the insert hole and a form such that said core part, subsequent to inserting the insert peg into an insert hole with said binding peg extending horizontally, can be rotated through 90°, to a position in which the binding peg extends upwards, in which position said projection or projections penetrate the upper and/or the lower wall of the insert hole and the core part is clamped firmly between the upper and lower wall of said insert hole.

Advantageous embodiments of the arrangement according to the invention have the characterizing features set forth in the depending claims.

In order to facilitate rotation of the aforementioned core part, and to permit the plate-like projection or projections to bite into the wall of the insert hole while displacing and compressing the wall material located around the projection or projections, said projection or projections is, or are, suitably pointed in the screw-in direction of the fastener in the hole. When the projection, or projections, has or have been produced by a punching or stamping operation, it is necessary to round the corners of the core, if said core has a substantially rectangular cross-section. By solely rounding two mutually diagonally opposite corners of the core, the invention affords the effect whereby, subsequent to turning the core through 90° the two remaining right-angled corners bear against the edges of the insert hole and prevent further rotation of the core in said direction. This means that the binding peg will always take the necessary vertical position, even when the fastener is mounted by an untrained person, and that the insert hole need not be subjected to wear as a result of unnecessary forward and backward screwing of the fastener.

In accordance with a preferred embodiment of the invention, the insert peg is bent to form a downwardly directed support arm, which absorbs the major part of the load exerted by the shelves when laden. As a result of this arrangement, the fastener means may be made from a particularly thin iron wire or rod material, which in addition to saving material requires but a small insert hole in a respective side-piece, thereby only minimally detracting from the aesthetic appearance of the side-pieces.

In order to relieve the core of the insert peg, the area of said core being decreased as a result of the form required of the core to permit it to be inserted into and rotated in the insert hole, from other loads than purely tensile loads, the bend extending from the insert peg to the support arm has been placed in an arc externally of the side-piece.

Because the fastener carrier arm has been placed, through the support arm, in a lower plane than the insert peg, the upper edge of the binding peg can be arranged in a position which does not overlie the centre of rotation in the inserted position of the insert peg in the side-piece, which means that the fastener cannot be skewed by any resistance which may occur when the binding peg is inserted into a binding-peg hole to hold a shelf pressed against the side-piece, through the spring force exerted by the binding means, with the force required to ensure that the side-piece will stand steadily upright after assembling a shelf thereto, during assembly. To facilitate entry of the binding peg into the binding-hole the hole is given a funnelshaped lead-in and the end of the peg is rounded.

The funnel-shaped or chamfered lead-in, the rounded end of the fastener bind peg, and the non-round configuration of the insert hole also afford the possibility of moving the fastener, particularly the insert peg, laterally in the insert hole when the binding hole located in a shelf being assembled is not positioned exactly above the binding peg. This fact, coupled with the non-round shape of the insert hole, enables round binding holes to be used, even when the shelves are made of solid wood, where the distance between the binding holes does not remain constant, due to the adjustment of the wood to the humidity of the surroundings.

An important feature of the invention is that the largest dimension of the insert hole lies horizontally, so that the insert peg is particularly supported at the upper side of the hole, in order to take-up those breaking forces which occur when lifting shelves from the fasteners which are often under spring tension, in conjunction with raising and lowering shelves in, or removing shelves from the shelving structure. Naturally, that the insert peg is well supported by the underside of the insert hole in a loadabsorbing manner is also important. Breaking forces acting in this direction, however, are taken-up by the support arm. When a side-piece has insert holes on both sides thereof, the holes are displaced relative to one another laterally, so that the holes on one side of the side-piece are offset relative the holes on the other side thereof, said sidepiece then serving as an intermediate upright. In assembly, the fasteners according to the invention are to be classified as readily-fitted so-called insert carriers or slip-in carriers. The fact that the insertion movement has been combined with a twisting or rotary movement when fitting a fastener is to be considered an advantage, since the fastener is, in this way, firmly locked to the side-piece, even before a shelf has been placed in position. The fact that the side-pieces can be readily handled with fasteners fitted thereto, enables the fasteners to be fitted to side-pieces, in selected measured positions therealong, while said sidepieces lie on a table, for example, in a central working area, whereafter the side-pieces can be lifted down and moved into position, and all concentration is centred on placing the shelves in their selected positions.

Because the material costs of fasteners according to invention lie at an absolute minimum even when compared with non-binding shelf-carriers, and because the fasteners can be readily manufactured by automation, the fasteners according to the invention can be used economically for supporting all the shelves in the shelving structure.

The advantages afforded hereby are many, among which can be mentioned that all the shelves are binding, which means a more stable shelving structure; minimum bearing width on the side-pieces, which can therefore be made of a relatively weak material; that the bottom shelf, for example, can be omitted, thereby providing more floor space etc.; all of the shelves can be moved, enabling the bottom shelf to be placed in a desired position for a bottom row of books, and the top shelf can be moved down to provide lateral support for objects placed thereon; and that because the shelving structure need not comprise a fixed centre shelf, a further shelf or further shelves can be fitted by simply raising or lowering the shelves already in place.

So that the invention will be more readily understood and additional features thereof made apparent, embodiments of fastener means according to the invention will now be described in more detail with reference to the accompanying drawings, in which

Figure 1 is a cross-sectional view of a side-piece and and shelf of a shelving structure, illustrating a fastener in two different positions of rotation,

Figure 2 is a perspective part view, illustrating the manner in which a shelf is hooked onto a fastener fitted to a side-piece;

Figure 3 is a cross-sectional view, similar to Figure 1, illustrating a modified type of fastener,

Figure 4 is a cross-sectional view of an insert peg of a fastener inserted into an insert hole, and

Figures 5 and 6 are each cross-sectional views, similar to Figure 3, illustrating a fastener with a single projection and with two mutually oppositely directed projections respectively.

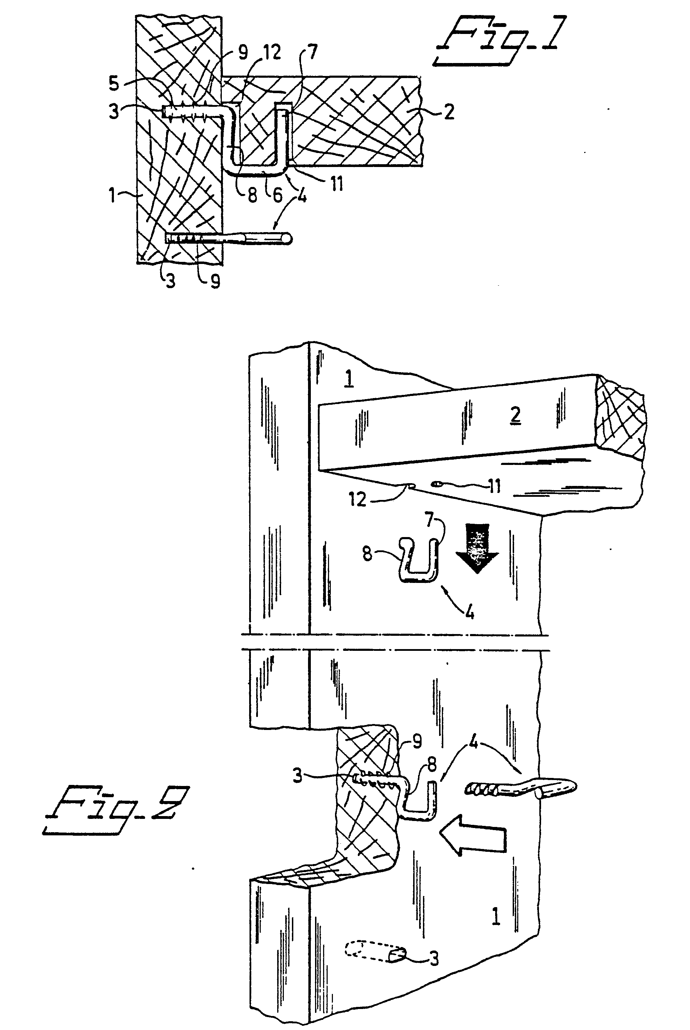

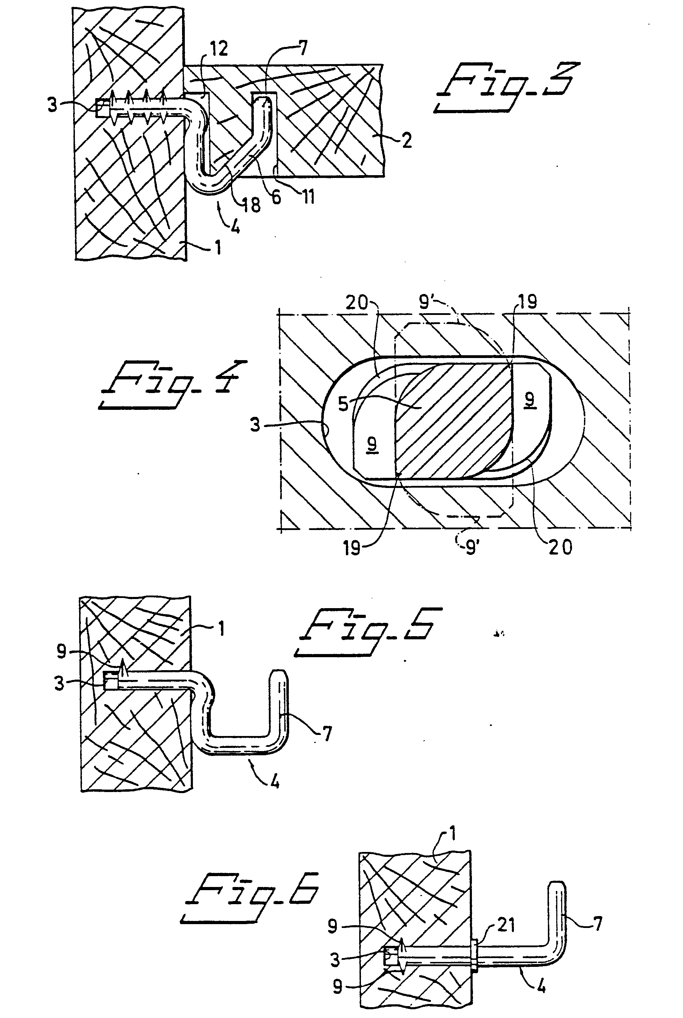

Figures 1 and 2 show part of a side-piece 1 and a shelf 2, both made from wood or, for example, from chipboard. The side-piece 1 is provided with a vertical row of insert holes 3, which are substantially of oval crosssection and which are milled horizontally. As illustrated in Figure 1, the insert hole 3 is arranged to receive a hook-shaped fastener 4. The fastener 4 comprises a bent steel-rod or steel-wire comprising an insert peg 5, a carrier arm 6, a binding peg 7 and a support arm 8, the support arm 8 connecting the insert peg 5 to the carrier arm 6 and being arranged to abut the adjacent surface of the side-piece 1. The insert peg 5 is formed, for example by pressing or stamping, with an oval crosssection and a number of plate-like projections 9. In the illustrated embodiment, a plurality of axially spaced projections 9 are arranged in a plane perpendicular to the longitudinal axis of the insert peg 5. The width of the projections 9 is substantially equal to the smallest width of the insert peg 5, and the projections extend in opposite directions parallel to the longitudinal axis of the binding peg 7, the largest width of the insert peg 5 being in said direction.

The ends of the projections 9 are rounded, so that the projections 9 have substantially the same form as the oval insert holes 3. It follows from this that if a fastener 4 is held horizontally, as illustrated at the bottom of Figure 1 and at the bottom right in Figure 2, the insert peg 5 together with its projections 9, can be readily inserted into an insert hole 3 until the support arm 8 bears against the side-piece 1. When the fastener 4 is then rotated through about 90°, the projections 9 will bite into the upper part and the lower part of the wall of the insert hole 3, while the peg is clamped between the upper and lower wall parts of the insert hole as a result of the non-round configuration of the insert peg 5, as shown with the fastener uppermost in Figure 1. The fastener 4 is then seated firmly in the insert hole 3, and cannot be withdrawn unless it is first rotated through 90°.

As illustrated in Figures 1 and 2, the shelf 2 is provided on its under-surface with a binding hole 11, which is arranged to receive the binding peg 7, and a recess 12 which is arranged in the end surface of the shelf and is intended to accomodate the support arm 8. The binding hole 11 is chamfered conically on the underside of the shelf, so that the fastener 4 can be readily guided into the hole when the shelf is placed in position on said fastener, as illustrated in Figure 2.

The thickness of the side-pieces 1 need only be slightly greater than the length of the insert peg 5 of the fastener 4. If shelves 2 are to be mounted on both sides of the side-pieces 1, the side-pieces should be a little thicker than the length of two insert pegs, the insert holes 3 suitably passing the whole way through or may have the same thickness as before, but with the insert holes displaced laterally relative to one another, so that the holes on one side are not in register with holes on the other side.

The fastener 4 need not necessarily have the form illustrated in Figure 1. The carrier arm 6 may, for example, advantageously be bent obliquely, as illustrated in Figure 3, and arranged to lie against a corresponding, chamfered surface 18 on the underside of the shelf 2, whereby the shelf 2 will be pressed against the side-piece 1 even when the carrier arm 6 is subjected to load and deflected downwardly.

The insert peg 5 with projection 9 suitably has the form illustrated in Figure 4, said form corresponding to the form of the insert hole 3. The cross-sectional shape of the insert peg is substantially oval or rhomboidal, with two longitudinally extending crests 19 at the extremities of the largest diameter, said crests being arranged, subsequent to inserting the insert peg, to prevent rotation of the peg in one direction, anti-clockwise in Figure 4, and to permit rotation of said peg through a given angle in the other direction, clockwise in Figure 4, in which position the projection 9 has been pressed fully home in the material of the side-piece surrounding the insert hole, as indicated in chain lines 9', while the increased diameter of the insert peg 5 in the transverse direction of the insert hole causes the insert peg 5 to be firmly clamped in the insert hole 3.

To enable the projection 9 to cut into the wall of the insert opening 3 more readily, said projection is suitably provided with sharp edges 20 at the leading edges thereof, as seen in the direction of screw-in rotation. Consequently, if desiring to remove the fastener the fastener must be rotated anti clockwise through said given angle, before it can be withdrawn from the insert hole.

A plurality of smaller projections 9, which can be readily formed when manufacturing the fastener 4, provide very positive locking of the fastener. Although a single, large projection 9 as illustrated in Figure 5 can be satisfactory, there should preferably be used at least two projections 9 extending in mutually opposite directions, as illustrated in Figure 6.

When the side-pieces 1 are made of a hard material, the support arm 8 can be omitted, so that the part of the fastener extending between the insert peg 5 and the carrier arm 6 is straight, as illustrated in Figure 6. In addition to the projection or projections 9, a shoulder 21, or some other suitable abutment, should be provided at the transition region between the insert peg and the carrier arm, so that when the abutment lies against the adjacent surface of the side-piece, the insert peg is inserted to the correct depth before the fastener is rotated to lock the same in the insertion hole.

As will be understood, it is not necessary, in this case, for the insert hole to be arranged at right angles to the plane of the side-piece, but can be made to slope at the same angle as that at which the carrier arm 6 is inclined in Figure 3, in which case the binding peg 7 must be angled correspondingly, so as to be perpendicular to the plane of the shelf 2.

Means for rigidifying the shelving structure diagonally and for fixing a possible back piece thereto in the construction of a complete shelving structure lie outside the scope of the form given to the fastener of the present Application. It is obvious, however, that the firm and reliable manner in which the shelves are held to the side-pieces when using the fastener according to the invention simplify the task of fitting a back-piece and stiffening stays in position, and the fastener may also be used to secure a diagonal, stiffening back plate whose vertical side edges are fixed in a respective slot in associated side-pieces.

The invention is not restricted to the illustrated and described embodiments, but can be modified in many ways within the scope of the following claims.

## Claims

1. A combination of a shelving structure and fasteners (4); the shelving structure being made of wood or of sheetlike material having properties like wood and comprising a side-piece (1) and a shelf (2), the fasteners (4) being one-piece and hook-like and each comprising an insert peg (5) which is arranged to be inserted into and locked in a corresponding insert hole (3) of non-round configuration formed in said side-piece (1) of said shelving structure, and which has arranged thereon locking means for preventing the withdrawal of said insert peg from said insert hole; a carrier arm (6) having an abutment surface against which the shelf is brought to bear; and an upstanding binding peg (7) which forms an angle with the shelf and which is inserted into a binding hole (11) in the under-surface of said shelf (2), thus locking the shelf to the side-piece (1) in a horizontal direction, characterized in that the insert peg (5) has a core part which is provided with a plate-like projection, or a plurality of axially spaced plate-like projections (9), located in a plane, or in respective planes, extending substantially at right angles to said core part on the upper and/or underside thereof, as seen in the direction of the upstanding binding peg (7); in that the nonround insert hole (3) has a width which is greater than its height and a cross-sectional shape which corresponds to the non-round shape of the core part and the projection or projections together; and in that the core part (5) has a height and a width substantially equal to the height of the insert hole (3) and a form such that said core part, subsequent to inserting the insert peg into an insert hole with said binding peg extending horizontally, can be rotated through 90°, to a position in which the binding peg extends upwards, in which position said projection or projections (9) penetrate the upper and/or the lower wall of the insert hole (3) and the core part is clamped firmly between the upper and lower wall of said insert hole.

2. A combination according to Claim 1, characterized in that the core part of the insert peg (5), said core having a height and width which corresponds to the height of the insert hole (3), has two diagonally opposite edges which are rounded and which permit the insert peg to be rotated in the insertion hole to a locking position, while two remaining edges (19) of said core part subtend right angles and, subsequent to rotating the insert peg to said locking position, bear against the wall of the insert hole and prevent further rotation of said insert peg in the screw-in direction, in which position the binding peg (7) extends vertically upwards.

3. A combination according to Claim 1 or Claim 2, characterized in that the plate-like projection or projections (9) have sharp edges which, when rotating the insert peg to said locking position, cut into the wall of the insert hole (3) to displace material defining said hole and to form resistance abutment surfaces for the plate-like projection or projections (9).

4. A combination according to Claim 3, characterized in that the plate-like projection or projections (9) is, or are, pointed in only the screw-in direction, so that the whole of the peripheral extension of the flanks of the projection or projections lies, or lie, against said abutment surfaces in the material defining the insert hole (3).

5. A combination according to any one of Claims 1 - 4, characterized in that the carrier arm (6) is located in a lower plane than the insert peg (5), and is connected to said insert peg through a support arm (8) arranged to lie against a respective side-piece in a manner to absorb the breaking forces occurring when a shelf is subjected to load and which attempt to twist the insert peg (5).

6. A combination according to Claim 5, characterized in that the transitional region of the fastener (4) from the insert peg (5) to the support arm (8) has the form of an outwardly directed arc, such that the insert-peg core, with its decreased area for insertion into and rotation in the insert hole (3), is not subjected to forces other than pure tensile forces.

7. A combination according to any one of Claims 1 - 6, characterized in that the carrier arm (6) is bent to form the upwardly extending binding peg (7) arranged to be received in a binding hole (11) formed in the underside of the shelf, which binding hole may be a round hole having a diameter substantially equal to the diameter of the binding peg (7), said round binding hole being chamfered at the entry thereof and the end of said binding peg (7) being rounded, to facilitate entry of the binding peg into said binding hole.

8. A combination according to Claim 7, characterized in that the upper part of the binding peg (7) lies beneath the centre of rotation of the fastener formed through the insert peg (5), so that the fastener remains vertical even when subjected to lateral tensile forces, which occur when the chamfered entry of the binding hole (11) combined with the rounded upper part of the binding peg (7) is used to laterally position the fastener when the binding pegs (7) are not positioned opposite the binding holes (11), and/or when the spring force of the fastener is used, despite tolerances in manufacture, to obtain rigid abutment between a side-piece (1) and a shelf end, holding the side-piece upright while a shelf (2) is being fitted.

## Revendications

1. Ensemble composé d'un rayonnage et de moyens de fixation (4); le rayonnage étant en bois ou en matériau plat semblable ayant des propriétés analogues à celles du bois et comprenant un côté (1) et une étagère (2), les moyens de fixation (4) étant d'une seule pièce analogues à un crochet et chacun d'eux comprenant une cheville d'insertion (5) disposée pour être insérée et bloquée dans un trou d'insertion correspondant (3) de forme non circulaire prévu dans ledit côté (1) du rayonnage; et dans lequel des moyens de blocage sont prévus pour empêcher la cheville d'insertion de sortir dudit trou d'insertion; un bras porteur (6) ayant une surface de butée contre laquelle l'étagère est amenée à porter; et une cheville de blocage vertical (7) qui fait un certain angle avec l'étagère et qui est introduite dans un trou de blocage (11) percé dans la face inférieure de ladite étagère (2), en bloquant ainsi l'étagère sur le côté (1) dans une direction horizontale, caractérisé par le fait que la cheville d'insertion (5) comprend une partie principale ayant une projection en forme de plaque, ou une pluralité de projections (9) en forme de plaques, espacées dans la direction axiale, située(s) dans un plan ou dans des plans respectifs, orientées sensiblement à angles droits par rapport à ladite pièce principale sur la face supérieure et/ou inférieure de cette pièce, comme on peut le voir dans la direction de la cheville de blocage vertical (7); par le fait que le trou d'insertion (3) non circulaire a une largeur supérieure à sa hauteur et une forme de section transversale qui correspond à la forme non circulaire de l'ensemble pièce principale et projection(s); et par le fait que la pièce principale (5) a une hauteur et une largeur sensiblement égales à la hauteur du trou d'insertion (3) et une forme telle que ladite pièce principale, après insertion de la cheville d'insertion dans le trou d'insertion avec la cheville de blocage orientée horizontalement, peut tourner de 90°, jusqu'à une position dans laquelle la cheville de blocage est orientée vers le haut, et que, dans cette position, la où lesdites projection(s)(9) pénètrent dans la paroi supérieure et/ou inférieure du trou d'insertion (3) et la partie principale est solidement bloquée entre la paroi supérieure et la paroi inférieure du trou d'insertion.

2. Ensemble selon la revendication 1, caractérisé par le fait que la pièce principale de la cheville d'insertion (5), ladite pièce d'insertion ayant une hauteur et une largeur qui correspondent à la hauteur du trou d'insertion (3), possède deux arêtes diagonalement opposées qui sont arrondies et qui permettent à la cheville d'insertion d'être tournée dans le trou d'insertion jusqu'en une position de blocage tandis que les deux autres arêtes (19) sous-tendent des angles droits et, qu'après la rotation de la cheville d'insertion dans cette position de blocage, lesdites arêtes appuient contre la paroi du trou d'insertion et empêchent une rotation ultérieure de ladite cheville d'insertion dans la direction de vissage, et que dans cette position la cheville de blocage (7) soit orientée verticalement vers le haut.

3. Ensemble selon la revendication 1 ou 2, caractérisé par le fait que la ou les projection(s) en forme de plaques (9) ont des arêtes pointues qui, lorsque l'on tourne la cheville d'insertion jusqu'à sa position de blocage, découpent la paroi du trou d'insertion (3) en déplaçant le matériau délimitant ledit trou et en formant des surfaces de butée résistantes pour la ou les projection(s) (9) en forme de plaques.

4. Ensemble selon la revendication 3, caractérisé par le fait que la ou les projection(s) en forme de plaques (9) est ou sont pointues seulement dans la direction de vissage, afin que la totalité de l'extension périphérique des flancs de la ou des projection(s) pose contre les surfaces de butée du matériau délimitant le trou d'insertion (3).

5. Ensemble selon l'une quelconque des revendications 1 à 4, caractérisé par le fait que le bras porteur (6) est situé dans un plan inférieur à la cheville d'insertion (5) et connecté à ladite cheville d'insertion par l'intermédiaire d'un bras support (8) disposé pour reposer contre le côté respectif de manière à absorber les forces de rupture se produisant lorsqu'une étagère est soumise à une charge lesquelles ont tendance à tordre la cheville d'insertion (5).

6. Ensemble selon la revendication 5, caractérisé par le fait que la région de transition du moyen de fixation (4) entre la cheville d'insertion (5) et le bras support (8) a la forme d'un arc orienté vers l'extérieur tel que la pièce principale de la cheville d'insertion avec sa surface réduite pour l'insertion et la rotation dans le trou de fixation (3) ne soit pas soumise à d'autres forces que des forces de traction uniquement.

7. Ensemble selon l'une quelconque des revendications 1 à 6, caractérisé par le fait que le bras porteur (6) est coudé pour former la cheville de blocage orientée verticalement (7) prévue pour être reçue dans un trou de blocage (11) formé sur la face inférieure de l'étagère, lequel trou de blocage peut être un trou circulaire ayant un diamètre sensiblement égal au diamètre de la cheville de blocage (7), ledit trou de blocage rond étant chanfreiné à son extrémité d'entrée et l'extrémité de ladite cheville de blocage (7) étant arrondie pour faciliter la pénétration de la cheville de blocage dans ledit trou de blocage.

8. Ensemble selon la revendication 7, caractérisé par le fait que la partie supérieure de la cheville de blocage (7) est située au-dessous du centre de rotation du moyen de fixation obtenu par l'intermédiaire de la cheville d'insertion (5) afin que le moyen de fixation reste vertical même lorsqu'il est soumis à des forces latérales de traction, ce qui se produit lorsque l'entrée chanfreinée du trou de blocage (11) associée à la partie supérieure arrondie de la cheville de blocage (7) servent à positionner latéralement les moyens de fixation lorsque les chevilles de blocage (7) ne sont pas placées face au trou de fixation (11), et/ou lorsque la force de ressort du moyen de fixation est utilisée, malgré les tolérances de fabrication, pour obtenir une butée rigide entre un côté (1) et une extrémité d'étagère, en maintenant le côté vertical pendant l'installation d'une étagère (2).

**Patentansprüche**

1. Eine Kombination einer Regalstruktur mit Verbindungsmitteln (4); die Regalstruktur ist aus Holz oder einem plattenförmigen Material gefertigt, dessen Eigenschaften denen von Holz entsprechen und enthält ein Seitenteil (1) und ein Fachbrett (2), wobei die Verbindungsmittel (4) einstückig und hakenförmig sind, und jedes von ihnen einen Haltefuß (5) aufweist, der einzusetzen ist in ein entsprechendes Aufnahmeloch (3) mit nicht konzentrisch kreisförmigem Querschnitt und in diesem zu verriegeln ist und der Verriegelungsmittel gegen das Herausziehen des Haltefußes aus dem Aufnahmeloch aufweist; jedes der Verbindungsmittel weist ferner auf einen Tragerm (6) mit einer Anschlagfläche, gegen die das Fachbrett zum Tragen anzulegen ist und einen nach oben stehenden Führungszapfen (7), der einen Winkel mit dem Fachbrett einschließt und in ein Führungsloch (11) in der Unterseite dieses Fachbrettes (2) eindringt, um so das Fachbrett mit dem Seitenteil (1) in horizontaler Richtung zu verriegeln, dadurch gekennzeichnet, daß der Haltefuß (5) ein Kernteil aufweist, das mit mindestens einem scheibenförmigen Vorsprung (9) oder einer Mehrzahl in axialer Richtung mit Abstand voneinander angeordneten scheibenförmigen Vorsprüngen versehen ist, der in einer Ebene liegt, die im wesentlichen unter einem rechten Winkel zum Kernteil gerichtet und in Richtung auf den nach oben stehenden Führungszapfen (7) gesehen an dessen Ober- und/oder Unterseite angeordnet sind; daß die nicht konzentrisch runde Aufnahmeöffnung (3) eine Länge hat, die größer als ihre Breite ist und eine Querschnittsform, die der nicht konzentrisch runden Form des Kernteiles und dem Vorsprung zusammen entspricht; und dadurch, daß der Kernteil (5) eine Länge und Breite hat, die im wesentlichen gleich sind der Breite der Aufnahmeöffnung (3) und eine Form, daß der Kernteil nach seinem Einführen in das Aufnahmeloch bei horizontal gerichtetem Haltefuß um 90° in eine Stellung zu drehen ist, in der der Führungszapfen nach oben gerichtet ist, wobei in dieser Stellung der genannte Vorsprung (bzw. die genannten Vorsprünge) (9) in den oberen und/oder unteren Wandteil des Aufnahmeloches (3) eingedrungen ist und das Kernteil fest zwischen dem oberen und unteren Wandteil des genannten Aufnahmeloches eingeklemmt ist.

2. Eine Kombination nach Anspruch 1, dadurch gekennzeichnet, daß das Kernteil des Haltefußes (5), dessen Breite und Länge der Breite des Aufnahmeloches (3) entsprechen, an zwei diagonal einander gegenüberliegenden Ecken abgerundet ist, um den Haltefuß in dem Aufnahmeloch in eine Verriegelungsstellung drehen zu können, während die beiden übrigen Ecken (19) des Kernteiles zwischen rechtwinklig zueinander verlaufenden Kanten liegen und nach einer Drehung des Haltefußes in die Verriegelungsstellung an der Wand des Aufnahmeloches anliegen und eine weitere Drehung des Haltefußes in der Eindrehrichtung verhindern, wobei sich der Führungszapfen (7) in dieser Stellung des Verbinders vertikal nach oben erstreckt.

3. Eine Kombination nach Anspruch 1 oder Anspruch 2, dadurch gekennzeichnet, daß der zumindest eine scheibenförmige Vorsprung (9) scharfe Kanten hat, die beim Drehen des Haltefußes in die Verriegelungsstellung in die Wand des Aufnahmeloches (3) einschneiden, um das Loch umgrenzendes Material zu verdrängen und Anschlagflächen für den zumindest einen scheibenförmigen Vorsprung (9) zu bilden.

4. Eine Kombination nach Anspruch 3, dadurch gekennzeichnet, daß der zumindest eine scheibenförmige Vorsprung (9) nur in der Eindrehrichtung geschärft ist, so daß die Gesamtheit der Erstreckung der Flanke des zumindest einen Vorsprunges in Umfangsrichtung gegen die Anschlagflächen in dem das Aufnahmeloch (3) umgrenzenden Material anliegt.

5. Eine Kombination nach einem der Ansprüche 1 bis 4, dadurch gekennzeichnet, daß der Tragarm (6) in einer Ebene unterhalb des Haltefußes (5) liegt und mit dem Haltefuß durch einen Stützarm (8) verbunden ist, der so angeordnet ist, daß er an einem zugehörigen Seitenteil anliegt, um Kräft aufzunehmen, die auftreten, wenn ein Fachbrett belastet wird und die den Haltefuß zu drehen suchen.

6. Eine Kombination nach Anspruch 5, dadurch gekennzeichnet, daß der Übergangsbereich des Verbinders (4) vom Haltefuß (5) zum Stützarm (8) die Form eines nach außen gerichteten Bogens hat, so daß der Kern des Haltefußes in seinem zum Einsetzen in das und Drehen in dem Aufnahmeloch (3) verkleinerten Bereich keinen anderen Beanspruchungen als Zugbeanspruchungen unterworfen ist.

7. Eine Kombination nach einem der Ansprüche 1 bis 6, dadurch gekennzeichnet, daß der Tragarm (6) zur Bildung des nach oben gerichteten Führungsarmes (7) gebogen ist, der zum Eindringen in ein Führungsloch (11) an der Unterseite des Fachbrettes bestimmt ist, wobei das Führungsloch vorzugsweise einen runden Querschnitt und einen Durchmesser hat, der dem Durchmesser des Führungszapfens (7) entspricht, und an seinem offenen Ende angefast ist, während das äußere Ende des Führungszapfens (7) abgerundet ist, um das Eindringen des Führungszapfens in das Führungsloch zu erleichtern.

8. Eine Kombination nach Anspruch 7, dadurch gekennzeichnet, daß das obere Ende des Führungszapfens (7) unterhalb der Drehachse des Haltefußes (5) des Verbinders liegt, so daß der Verbinder in seiner vertikalen Stellung bleibt, selbst wenn er seitlich gerichteten Zugkräften unterworfen ist, die auftreten, wenn das angefaste offene Ende des Aufnahmeloches (11) in Verbindung mit dem abgrundeten oberen Ende des Eindringzapfens (7) verwendet wird, um das Befestigungsmittel seitlich festzulegen, wenn die Eindringzapfen (7) nicht den Aufnahmelöchern (11) gegenüberliegend angeordnet sind und/oder wenn die Federwirkung des Verbinders ausgenutzt wird, um trotz Fertigungstoleranzen eine starre Anlage zwischen einem Seitenteil (1) und einem

**0 089 934**

Fachbrettende zu erhalten, um das Seitenteil während der Zuordnung eines Fachbrettes (2) vertikal stehend zu halten.

_Fig_1

_Fig_2

_Fig_3_

_Fig_4_

_Fig_5_

_Fig_6_